Europäisches Patentamt

**European Patent Office**

Office européen des brevets

(19)

(11) Publication number: **0 077 848**
A1

(12)

# EUROPEAN PATENT APPLICATION

(21) Application number: **81109092.7**

(22) Date of filing: **28.10.81**

(51) Int. Cl.³: **C 02 F 3/10**
**C 02 F 3/06**

(54) A fluid treatment packing and a method of treating fluid using the packing.

Fig.3

EP 0 077 848 A1

A FLUID TREATMENT PACKING AND A METHOD OF TREATING FLUID
USING THE PACKING

The present invention relates to a fluid treatment
packing and its use.

The invention provides a fluid treatment packing
having a plurality of generally parallel flow paths for
fluid therethrough, which packing comprises an
arrangement in three dimensions of a multiplicity of
strips each elongated along the sense of the x axis of the
packing and arranged generally parallel to the x axis of
the packing, at least some of the strips having transverse
ridges therein, the strips being mounted so that they are
orientated in edge to edge relationship to another along
the sense of the z axis of the packing, the strips being
arranged in spaced relationship one above one another
along the sense of the y axis of the packing to form
between two strips adjacent along a y axis of the packing
an undulating flow path through the packing, a plurality
of the ridged strips being laterally adjacent to one
another along a z axis of the packing with at least some
of the ridges on immediately adjacent strips being out of
register with one another.

The invention also provides a method for treating a
fluid which comprises causing the fluid to flow through
the packing of the invention, preferably bacteria are growing on the surface of the strips and the treatment of the fluid is biological.

For convenience the term layer of the packing will be used herein to denote the plane containing a given pair of x and z axes of the packing.

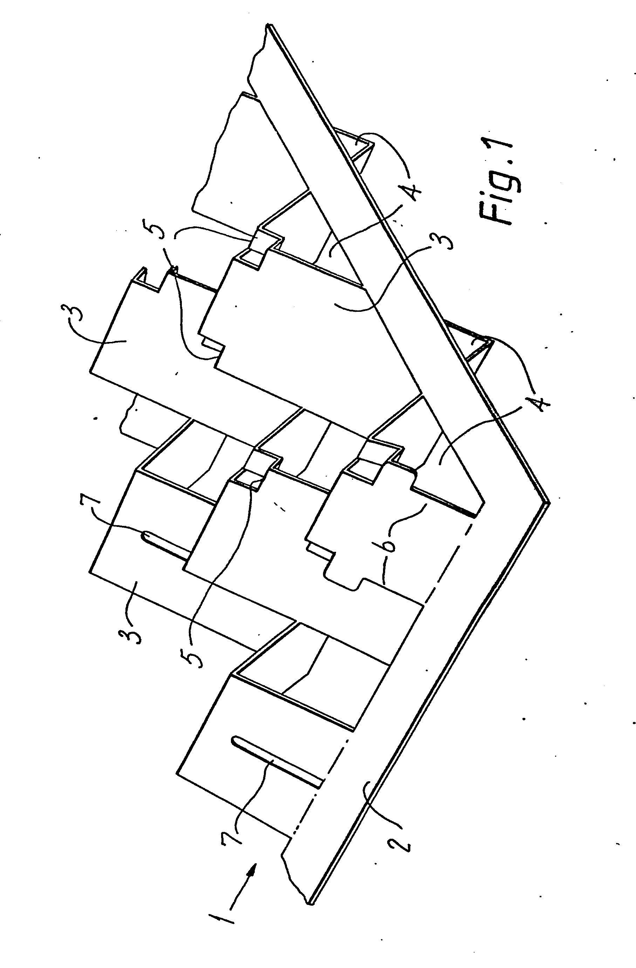

The strips in the packing can be formed with a single transverse ridge (as shown in Figure 6 of the accompanying drawings) or more preferably with a series of parallel transverse ridges (as shown in Figure 1). The term corrugation is for convenience used herein to denote both cases. The ridges can be of triangular, sawtooth, squared or sinusoidal cross-section or wave form.

It is generally preferred that all the strips in a layer be corrugated, but this need not be so. For example the periphery of a layer can be uncorrugated to provide mounting means for forming the packing. Also it is not necessary that the corrugation in all strips in a layer or in each of the layers be of the same wave form. Thus, some layers could be of triangular corrugation wave form whereas others are of square wave corrugation form.

The width of the strips and the forms of corrugation thereon may be varied over wide ranges to achieve the desired form of layer. However, we prefer that the strips be from 0.5 to 10 cms wide along the sense of the z axis of the packing and that the maximum amplitude of the corrugations along the sense of the y axis of the packing be in the range 0.5 to 10 cms.

The layers of strips may be made as a single unit by a number of methods, e.g. by drop forging, pressing, rolling, extrusion or injection moulding of metal or plastics or, most preferably, by vacuum forming a sheet of thermoplastic or thermoset polymer. Certain of these production methods may give rise to corrugated sheets wherein upright webs of material are formed at the contact line between two adjacent strips. These webs may be retained but are often thin and fragile and collapse during handling and installation of the sheets. In some cases it may be desired to punch out or remove some, e.g. up to 50%, of the webs during or after manufacture. If the web is to be retained it may be necessary to vary the production method to achieve this. It may also be preferred to provide the corrugations and the webs (where present) with stiffening ribs. This may be achieved by moulding ribs on the corrugations and webs. It is also preferred to round all corners in the mould to assist moulding.

The packing is made by linking together individual strips in edge to edge relationship. This may be done in a number of ways. Thus, the strips could be linked together directly, e.g. by gluing or welding them together at the points of contact or by linking them mechanically, e.g. by providing inter-engaging slots and notches which engage, preferably in a snap fit, to link the strips together. Alternatively, the strips may be linked together indirectly via a support structure. Thus, the strips may be mounted edge on onto an apertured sheet and this structure then linked, e.g. by gluing or welding, to another perforated sheet to the opposite face of which further strips are mounted; and so on to build up a block comprising superimposed layers of corrugated strips having vertical support plates. Alternatively, the strips could be mounted on support rods, e.g. by snap fastening, glueing or welding the edges of the strips onto vertical rods so as to build up layers of superimposed strips on an internal framework.

In forming the packings of the invention from unitary sheets of strips these are stacked upon one another and linked together to form cubes or rectangular blocks. The sheets are preferably stacked so that the corrugations on one strip in a sheet are substantially in phase with the corrugations of the corresponding strips in the adjacent sheets in the stack. The sheets are linked together by any suitable means, e.g. by adhesive, by welding, by interlocking slots on the corrugations, by snap fittings or by suitable internal and/or external supporting framework, e.g. as described above for linking together individual strips. Where the sheets are vacuum moulded, we have found it particularly convenient to provide lateral notches at both sides of the crests of ridges of the corrugations into which the troughs of the ridges of the corrugations of a superimposed sheet engage. In this way the area of contact between superimposed sheets is increased and application of an adhesive in each notch provides a simple means for affixing one sheet to another. The blocks of sheets so produced permit flow of fluid through the block in two directions in the plane of the sheets, i.e. along the x and z axes of the packing. Where the webs in vacuum formed sheets have collapsed or been removed, or the stock is formed from individual strips, transfer across the plane of a sheet, i.e. along the y axis of the packing, may also take place. Thus, by altering the orientation of individual sheets within each block, or of the blocks themselves, it is possible to cause fluid to flow in a multiplicity of paths through a column containing the blocks.

The packings of the invention can be made from a wide range of suitable materials, e.g. plastics, plastics coated material (e.g. plastics coated paper or metal), or metal (notably stainless steel). A particularly preferred material for present use is a rigid or semi-rigid plastics sheet, notably a PVC, polystyrene, ABS, polyacetal, polyamide, high density polythene or a structural plastics sheet. The material may be porous or imperforate and may have a smooth or roughened surface.

The packings of the invention find use in cooling, scrubbing or distillation towers, but are of especial use in the anaerobic or aerobic biological treatment of effluent, notably those which arise in agriculture; in the food industry, e.g. during the freezing or canning of food; during brewing or distilling; during the processing of meat or poultry; in textile processing, e.g. laundry effluent; in tanneries; and in the papermaking, pharmaceutical or plastics industries. The packings of the invention also find use in other applications where it is desired to contact a fluid with a gas, e.g. in a scrubbing tower or a distillation column; or where it is desired to contact a liquid with a bacterial growth, e.g. in the growth of bacteria in a hydrocarbon medium, for example during the purification of a hydrocarbon or in the production of proteins and/or yeasts; or in biological reaction systems, e.g. in the preparation of penicillins and the like. Thus, the packings of the invention may be used totally or only partially submerged in a liquid medium; with a film of liquid medium on the surfaces thereof; or in a vapour phase system.

The present invention will now be described by way of illustration only with respect to the accompanying drawings in which:

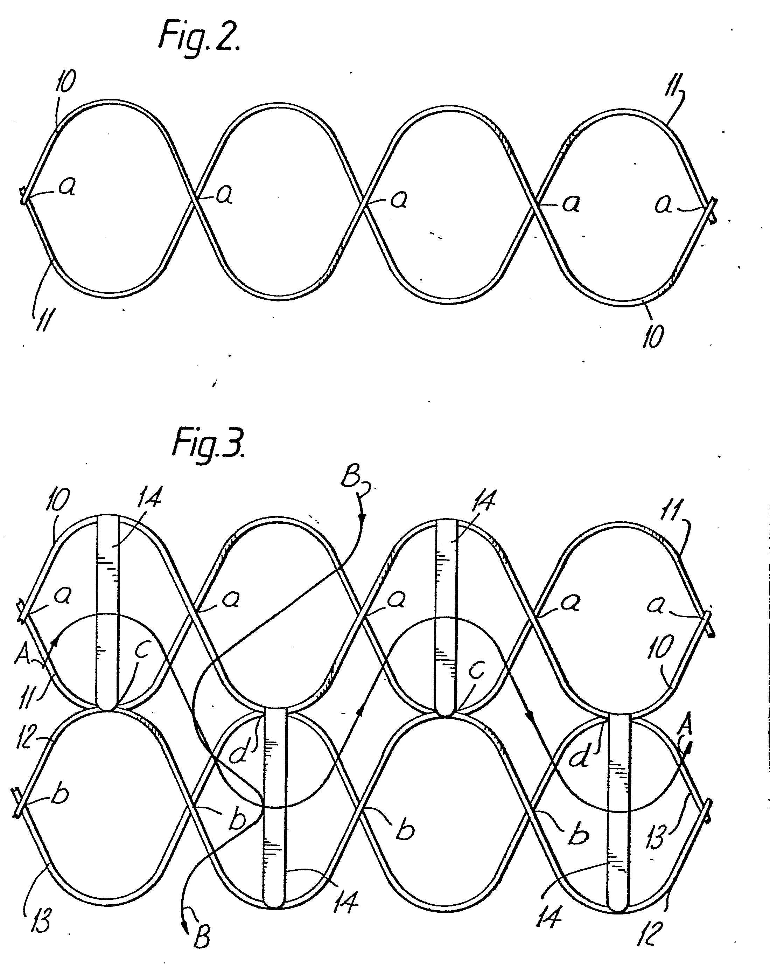

Figure 1 is a diagrammatic view of a simple form of a unitary sheet used to construct a packaging of the invention; and Figures 2 to 6 represent alternative forms of construction.

A sheet of thermoplastic polymeric material, e.g. rigid PVC, is vacuum formed to produce a sheet 1 having a flat peripheral mounting flange 2 and a series of corrugated strips 3 running the length of the sheet. Each corrugated strip has a triangular wave form with a total amplitude of 3 cms from the crest to the trough and a wave length of 7 cms. The corrugations on adjacent strips are ½ a wave length out of register. The webs on the contact line between the strips are indicated at 4. Typically, such a sheet is from 0.5 to 1 metre square. At each side of the crest of each ridge there is formed a notch or socket 5 which is of such size and shape (in this case diamond shaped) that the sides of the trough of a ridge of a corrugation of a superimposed sheet will locate in the sockets 5 at each side thereof.

A block of sheets is built up from the sheets of Figure 1 by placing them one upon another, either by slotting the flanges 2 into a support framework, or by attaching the crests of the corrugations in one layer to the troughs of the corrugations in the superimposed layer by locating the trough ridge ends in the sockets 5 to which adhesive has been applied. Alternatively, adjacent sheets could be rotated through $90^{\circ}$ so that the corrugations of one sheet lie across the corrugations of the adjacent sheets, the ridges of the troughs of one sheet resting on the ridges of the crests of another. Where the webs 4 are left intact, fluid may flow through a stack of such sheets along the planes of the sheets but not across the plane of the sheets. If it is desired that the fluid flow be in three dimensions, some of the webs 4 may be perforated.

In order to assist the flow of the plastics material during moulding it may be desired to round the corners of the strips as shown at 6 and to provide longitudinal stiffening ribs 7.

In Figures 2 and 3 a sheet is made up from separate strips 10 and 11, half a wave length out of register and linked together e.g. by welding at the cross-over points a where their edges contact. Another sheet is formed from similar strips 12 and 13 linked at b. The first sheet is placed above the second so that strips 10 and 12 lie above one another and are in phase. The crests of strip 13 thus lie alongside the troughs of strip 10 and are linked together at the points of contact d. Similarly the crests of strip 12 lie alongside the troughs of strip 11 and are linked at points c. The construction is repeated as shown in Figure 3 to form a stack of sheets of the desired size. In order to improve the strength of the assembly, the strips may overlap one another at points c and d so that the contact is between faces of the strips rather than as a butting edge to edge contact. If desired spacing members 14 may be provided.

The stacks of Figures 1 and 2 present a honeycomb-like structure through which liquid can flow in contact with the strips on which bacteria can grow. The stack preferably has a ratio of exposed surface area in square metres to volume in cubic metres of 75:1 or more, notably 120:1 to 200:1.

In use, the sheets of strips are formed into stacks as described above and the stacks put into a vessel, e.g. merely by placing one on top of another, or in a suitable supporting frame work. Liquid is then caused to flow through the vessel and bacteria are grown on the surfaces of the stacks in the conventional manner. Liquid and air may flow through the stacks in three different directions; either longitudinally through the undulating passage between two strips (arrow A) in which case there is comparatively little change in flow path of liquid through the stack; through the transfer areas, that is in a direction normal to the plane of Figure 3, in which case again there is comparatively little change in flow path; or down through the plane of the sheets by interchange of levels through the transfer areas (arrow B) in which case there is considerable change in flow path and increase in flow path length.  It is thus possible to vary the flow path through a vessel merely by altering the orientation of the stacks therein.

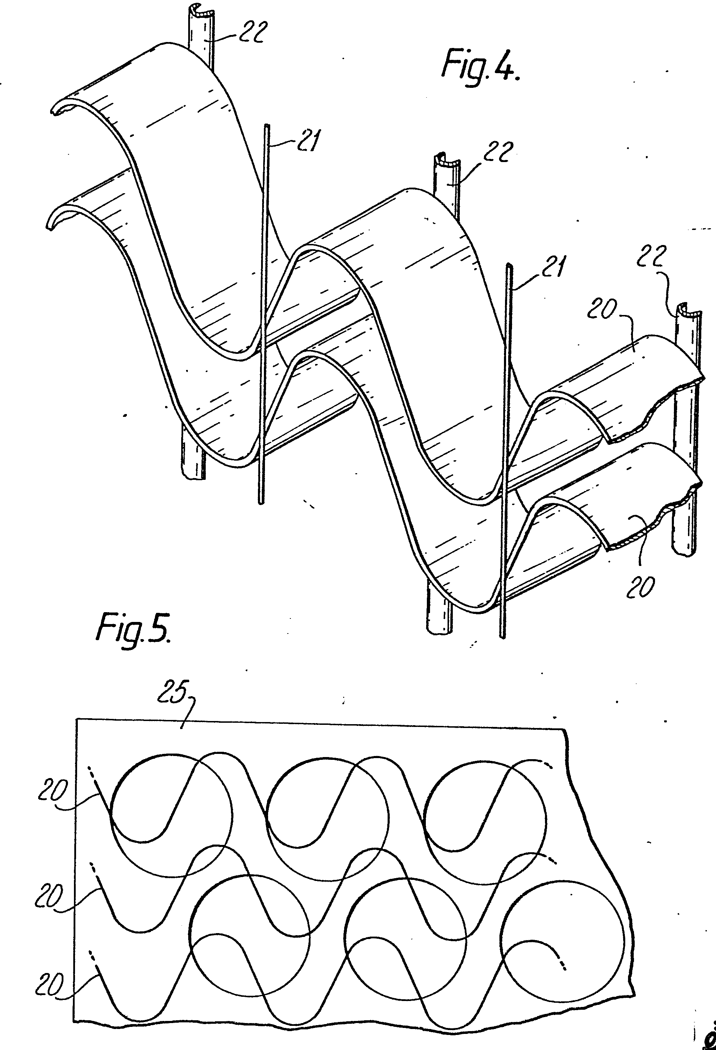

The above forms of packing may be modified in a number of ways.  Thus, the sheets and strips need not be fixed to one another at a, b, c and d, but may be mounted in a supporting framework.  If desired, tensioned wires, rods or other support means may be passed through the transfer areas to provide internal support for the strips and sheets.  Such a construction is shown in Figure 4 wherein a series of strips 20 are moulded mounted edge on on a series of support rods 21.  The opposite edges of the strips having channels 22 or recesses into which the support rods 21 of another unit may be snapped.  In this way a block of strips may be built up from standard units.

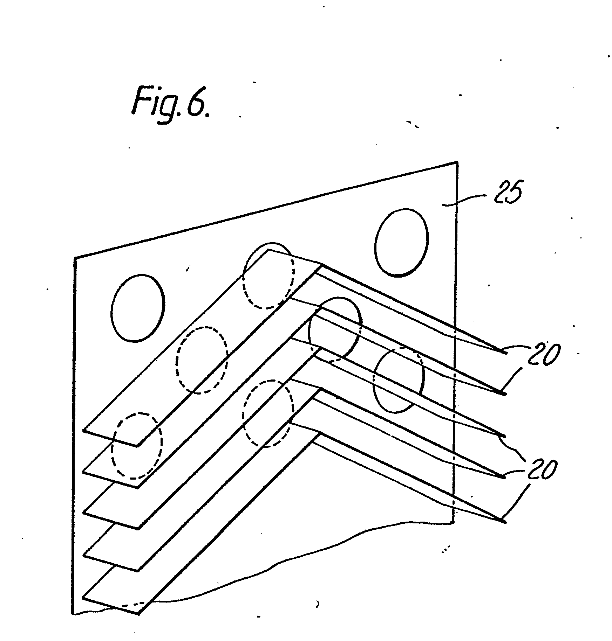

Alternatively, as shown in Figure 5, the strips 20 may be mounted edge on on a plate 25, which is preferably apertured, so as to form a vertical 'slice' of a stack and to place such a slice with its plate 25 bearing against the free edges of the strips 20 of another similar slice so as to build up the packing element. The strips 20 may be mounted edge on onto each side of the plate 25 being staggered so that when the units are offered up against one another the strips 20 of one unit interleave the strips 20 on the adjacent unit. If desired some of the strips 20 may be slotted and interlock with slotted strips 20 on adjacent units to provide a rigid structure. It is preferred that the holes in the plate 25 overlap the strips attached thereto as is shown in Figure 5. If desired, the apertures in the plate 25 may be positioned so that they lie in the apexes of the troughs and crests of the strips 20 to minimise dead spots in the flow path of liquid through the packing element. Alternatively, plate 25 could be in the form of a grid or mesh, e.g. an expanded metal screen. Whilst the strips 20 may be of wave or other undulating form, they may also be of simpler form, e.g. as shown in Figure 6.

Whilst the invention has been described in terms of a static packing through which the liquid to be treated flows, it will be appreciated that the packing may be caused to move through the liquid.

What we claim is:-

1.    A fluid treatment packing having a plurality of generally parallel flow paths for fluid therethrough which packing comprises an arrangement in three dimensions of a multiplicity of strips each elongated along the sense of the x axis of the packing and arranged generally parallel to the x axis of the packing, at least some of the strips having transverse ridges therein, the strips being mounted so that they are orientated in edge to edge relationship to one another along the sense of the z axis of the packing, the strips being arranged in spaced relationship one above another along the sense of the y axis of the packing to form between two strips adjacent along a y axis of the packing an undulating flow path through the packing, a plurality of the ridged strips being laterally adjacent to one another along a z axis of the packing with at least some of the ridges on immediately adjacent strips being out of register with one another.

2.    A fluid treatment packing according to Claim 1 formed from a plurality of superimposed single sheets of material each having corrugated strips formed therein.

3.    A fluid treatment packing according to either of Claims 1 or 2 wherein the strips are from 0.5 to 10 cms wide in the sense of the z axis of the packing and each ridge or corrugation has an amplitude of from 0.5 to 10 cms in the sense of the y axis of the packing.

4.    A method for treating a fluid which comprises passing it through a packing as claimed in any one of Claims 1 to 3.

5.    A method for treating a fluid as claimed in Claim 4 wherein bacteria are growing on the surfaces of the strips and the treatment is biological.

Fig.1

0077848

Fig. 2.

Fig. 3.

Fig. 4.

Fig. 5.

Fig.6.

25

20

20

0077848

4/4

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | <u>US - A - 3 232 865</u> (QUINN)<br>* Column 1, lines 9-14; column 3, lines 32-51; claim 1; fig. 1,2 *<br><br>-- | 1,2,4,5 | C 02 F 3/10<br>C 02 F 3/06 |
| A | <u>US - A - 3 347 381</u> (MINCH)<br>* Abstract; column 2, line 39 - column 3, line 62; fig. 1,5-8 *<br><br>-- | 1,2,4,5 | |
| A | <u>GB - A - 937 597</u> (MEAD)<br>* Claim 1; page 2, line 38 - page 3, line 85; fig. 1,5-8 *<br><br>---- | 1,2,4,5 | **TECHNICAL FIELDS SEARCHED (Int.Cl. 3)**<br><br>C 02 F |

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons
&: member of the same patent family, corresponding document

| X | The present search report has been drawn up for all claims | | |
|---|---|---|---|
| Place of search<br>VIENNA | Date of completion of the search<br>11-05-1982 | Examiner<br>WILFLINGER | |